Europäisches Patentamt

European Patent Office

Office européen des brevets

(11) Publication number: **0 255 030**
**A1**

(12) **EUROPEAN PATENT APPLICATION**

(21) Application number: **87110597.9**

(22) Date of filing: **22.07.87**

(51) Int. Cl.4: **H02G 7/05**

(30) Priority: **22.07.86 IT 2259986 U**
**19.02.87 IT 1942887**

(43) Date of publication of application:
**03.02.88 Bulletin 88/05**

(84) Designated Contracting States:
**AT BE CH DE ES FR GB GR IT LI LU NL SE**

(71) Applicant: **A. Salvi & C. S.p.a.**
**Via E. Cosenz, 32**
**I-20157 Milano(IT)**

(72) Inventor: **Diana, Giorgio**
**Via Bassini, 23**
**I-20133 Milano(IT)**
Inventor: **Benvenuti, Giorgio**
**Via A. Massena 14**
**I-20145 Milano(IT)**

(74) Representative: **Faggioni, Giovanmaria, Dr. et al**
**Fumero-Studio Consulenza Brevetti**
**Widenmayerstrasse 4/I**
**D-8000 München 22(DE)**

(54) Clamping device for retaining cables or conductors incorporating optic fibres.

(57) The invention concerns a clamping device for retaining cables or conductors of overhead electric lines, particularly used for cables or conductors incorporating, along their axis, a sheathing containing optic fibres. The clamping device comprises at least one pair of clamping plates, each provided with an axial groove for housing the cable or conductor. According to the invention, said grooves have, through part of their length, a cylindrical surface precision machined according to the dimensions of the outer cylindrical surface of the conductor and, through another part of their length, preferably in correspondence of the two ends, recesses for housing damping pads of elastomeric material.

Fig. 1

EP 0 255 030 A1

## "CLAMPING DEVICE FOR RETAINING CABLES OR CONDUCTORS INCORPORATING OPTIC FIBRES"

The present invention concerns a clamping device for retaining cables or conductors of overhead electric lines and anchoring them to the respective suspension poles, said devices being used in particular for cables or conductors incorporating a central sheathing containing optic fibres.

It is known that present technology is developing the use of optic fibres for transmitting signals of any type, particularly for telecommunications. For this purpose, the optic fibres - each of capillary dimensions - are housed inside a sheathing laid out on the path along which said signals have to be transmitted.

The various solutions considered in developing this technology also include that of arranging the optic fibres sheathing inside and precisely along the axis of cables or conductors used for transmitting electric energy in overhead electric lines.

In other words while, according to the conventional technique in the field of overhead electric lines, the cables or conductors are simply formed of a plurality of steel or aluminium wires helically wound into several superposed layers, according to this new technology, the steel or aluminium wires forming the cables or conductors are wound on a central core consisting of a tubular metal body or sheathing containing optic fibres.

Since said sheathing is positioned through the centre of the cable or conductor; it is neither influenced nor disturbed by the energy carried by the conductor itself. On the other hand, this construction provides the great advantage of allowing to use the existing structures - i.e. the suspension poles and the conductors or cables of the overhead electric line - thereby eliminating the need to construct special duct systems for the optic fibres sheathings.

The construction and use of such cables incorporating optic fibres sheathings require however unusual working techniques, taking into account the fact that the optic fibres are extremely fragile and that any deformation of the sheathing containing the same may cause defects or difficulties in the transmission of the signals, and is even apt to interrupt said transmission.

The present invention particularly concerns the structure of a clamping device, apt to be used both for the suspension or anchorage of said conductors or cables to the poles of the electric line, and for connecting vibration dampers or spacers to the conductors or cables.

A known-type suspension clamp generally consists of a lower body having a cradle cross section and of an upper pressure plate - both of pressed and galvanized steel and/or of melted aluminium alloys - between which the conductor or cable is housed; two or more tightening U bolts allow to clamp the conductor between the cradle body and the pressure plate, so as to positively retain the same. The specifications provide for the clamping to be such as to prevent even an axial sliding of the conductor in respect of the clamp, at least as long as the tension load applied to the conductor remains below a predetermined value, which is usually fixed at a percentage (for example of the order of 20 to 25%) of the breaking load of the conductor.

A conventional type anchor clamp is essentially formed of a pair of clamping plates, each provided with a longitudinal groove and one of them being provided with a hook extension for anchorage to the pole; the two clamping plates are kept joined by a plurality of transversal bolts, with the respective grooves facing each other and forming a duct for housing the end of the cable or conductor. Once said end has been inserted between the two plates, these are tightly clamped together onto the conductor by means of said transversal bolts.

In order to guarantee the retention of the conductor against axial sliding - under a tension load which, in this case, is foreseen to be of the order of 90% of the breaking load of the conductor - the plates are clamped until a local deformation of the conductor is substantially obtained.

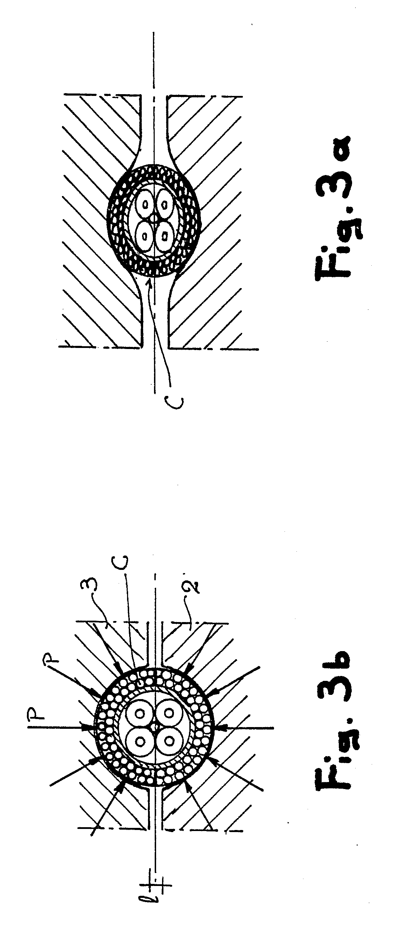

In fact, the groove or cradle sections of these known-type clamps - having besides dimensions apt to house even conductors of different diameter - generally cause a substantial ovalization of the conductor when clamping the same (as illustrated in the section of figure 3a).

Obviously, these types of clamps can by no means be used for a conductor incorporating an optic fibres sheathing since, in order to obtain the required clamping action, the conductor is squashed to such an extent that the sheathing, and hence the optic fibres contained therein, are irreparably damaged therefrom.

The object of the present invention is to realize a clamping device of the aforementioned general type, but having an improved structure to allow its use also for conductors incorporating optic fibres sheathings. This result is obtained essentially due to the fact that the clamping device according to the invention - of the type comprising at least one pair of clamping plates, each provided with an axial groove for housing the cable or conductor - is characterized in that said grooves are precision machined, through part of their length, according to an exactly cylindrical surface having a radius not exceeding 120% of the theoretic radius of the conductor, and that they comprise, through another part of their length close to at least one of their ends, recesses for housing damping pads of elastomeric material.

Further characteristics and advantages of the clamping device according to the present invention will anyhow be more evident from the following detailed description of some preferred embodiments thereof, illustrated by way of example on the accompanying drawing, in which:

Fig. 1 is a perspective view of a partially open clamping device according to the invention, used as suspension clamp;

Fig. 2 is an axial section view of the clamping device of figure 1;

Figs. 3a and 3b are enlarged scale section views, showing the detail of a conductor clamped between a clamp of known technique and, respectively, between a clamping device according to the invention;

Fig. 4 is a plan view of the clamping device according to the invention, with some parts removed and others sectioned, used as anchor clamp;

Fig. 5 is a cross-section view along the line V-V of figure 4;

Fig. 6 is a longitudinal section view along the line VI-VI of figure 4, with parts in front elevation;

Fig. 7 is a lateral comprehensive view of a vibration damper using a clamping device according to the invention; and

Figs. 8 and 9 are diagrammatic part section views, respectively along the line VIII-VIII of figure 7, and along the line IX-IX of figure 8.

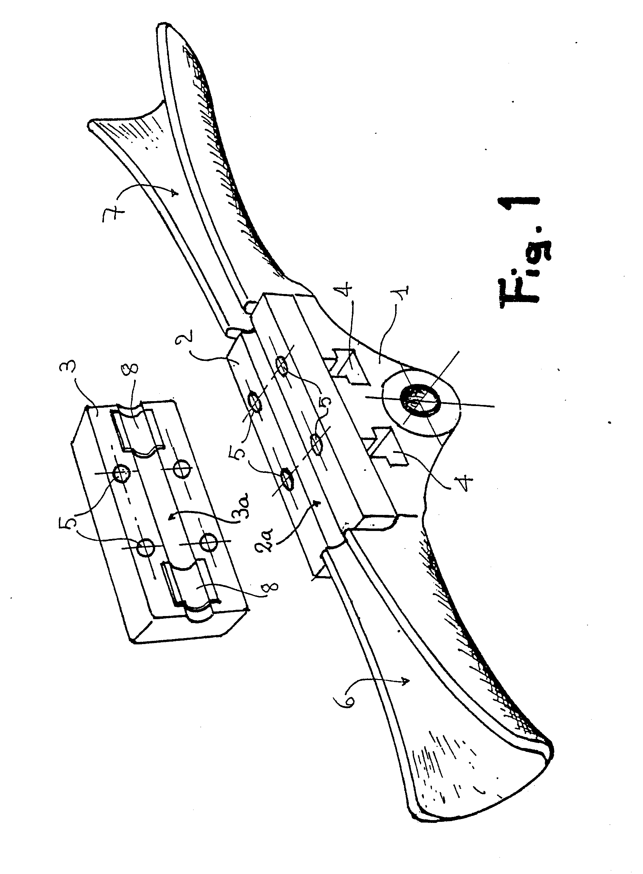

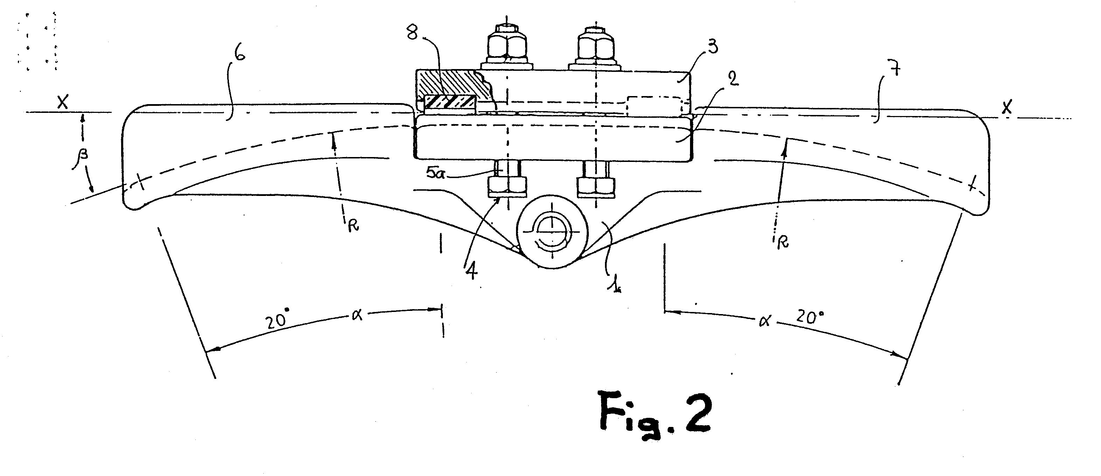

As shown, the clamping device according to the invention comprises - in the embodiment of figures 1 and 2 - a support body 1, a lower clamping plate 2 and an upper clamping plate 3. Transversal slits 4, having an overturned T-section, are formed in the central part of the body 1, said slits 4 being apt to receive the heads of tightening bolts 5a (Fig. 2), whose shanks extend upwards through holes 5 into the plates 2 and 3. Nuts (also not shown) cooperate with said bolts, to obtain the clamping of the plates 2 and 3 and, at the same time, to guarantee the retention of said plates onto the support body 1.

According to a fundamental characteristic of the invention, axial grooves 2a and 3a are formed in the clamping plates 2 and 3, said grooves being - through at least part of their length - precision machined according to a semicylindrical surface, whose circular section develops over an arc of preferably just less than 180°.

Furthermore, the radius of the circular section of the grooves is equal or very close to the theoretic radius of the conductor C, and preferably not exceeding 120% of the theoretic radius of the conductor or cable.

According to another fundamental characteristic of the invention, the plates of the clamping device comprise - in correspondence of the ends of the precision machined grooves 2a and 3a - recesses into which are housed pads in the form of sleeves or half-sleeves 8 of elastomeric material. The recesses are formed with a semicylindrical shape, having a diameter wider than that of the grooves, so as to form annular shoulders for axially retaining the sleeves 8, as it appears evident from the drawings.

The sleeves 8 have of course an external surface which fits perfectly into said end recesses of the grooves 2a and 3a. The radial thickness of the sleeves 8 exceeds the radial depth of the recesses, so that the elastomeric material of which they are formed is compressed against the conductor at the moment in which the clamping of the plates 2 and 3 takes place.

According to the embodiment shown in figures 1 and 2, the pads actually consist of half-sleeves 8, provided merely in correspondence of the ends of the groove 3a of the upper clamping plate 3; it is however understood that it is possible, and in certain cases necessary, to provide for whole-sleeves 8, housed into end recesses formed in correspondence of the grooves of both plates 2 and 3. The choice of either of these embodiments depends on the damping requirements - as specified hereinafter - which have to be satisfied each time, according to the environmental conditions and/or the tensioning characteristics of the conductor.

As can be easily understood, the construction of the grooves 2a and 3a with a precision machined semicylindrical surface having a radius equal or very close to the theoretic radius of the conductor, allows to obtain a perfect clamping of said conductor in the sense that, as evidenced in figure 3b:

-the fact that the grooves 2a and 3a are precision machined with a radius very close to the theoretic radius of the conductor and that they can each develop over an arc of less than 180°, allows to obtain - with the plates clamped so as to anyhow leave a small gab l between them - an overall contour of the two facing grooves 2a and 3a corresponding to a substantially exact circle; in this way, the pressure (arrows P in figure 3b) imparted on the conductor by the surfaces of the grooves 2a and 3a is evenly distributed over the whole contour of said conductor, thereby eliminating any possibility of squashing;

-thanks to the fact that the clamping pressure is imparted on the whole surface of the conductor - and not only on two diametrally opposed zones thereof, as with the conventional clamps (figure 3a) - said pressure can be kept relatively lower and thus - all the more, it does not risk to damage the conductor.

On the other hand, in addition to said positive axial retention - preventing any sliding or, respectively, squashing risks - the heretofore described construction, with pads at the ends of the grooves, is apt to guarantee that the conductor, and above all the sheathing incorporated therein, do not undergo damage through fatigue in correspondence of the critical points of insertion of the conductor into the precision machined grooves of the clamping device. This function is in fact performed by the sleeves 8, allowing to dampen the oscillations or vibrations of the conductor exactly in correspondence of those critical points.

To complete the clamping device illustrated in figures 1 and 2, the body 1 is provided with two tailpieces 6 and 7, axially extending from the lower plate 2. Each of the two tailpieces 6 and 7 has a saddle configuration similar to an axially sectioned trumpet, i.e. practically a half-trumpet, the inner surface of which opens upwards. This surface - being a surface of revolution about the longitudinal axis X-X of the clamping device - has a curvature radius R exceeding 450 mm (as evidenced by the axial section of figure 2).

Furthermore, said surface of revolution extends, along the axis of the conductor, over an arc having an angle at the centre α of at least 20°, which means to say that its opening cone β is of at least 20°. On the other hand, this surface extends, in a direction transversal to the axis of the conductor, over an arc of 180°.

In its narrower part, said saddle-shaped surface has a semicircular section corresponding to that of the groove of the lower plate 2, so that it is perfectly joined thereto.

Hence, said saddle-shaped tailpieces 6 and 7 provide a static bearing surface for the conductor, which surface - as said - joins perfectly with the surface of the lower precision machined groove 2a of the clamping device, so as not to present any solution of continuity in the bearing of the conductor. In addition to this:
-the curvature radius of at least 450 mm is wide enough to be compatible with the flexibility characteristics of the conductor, or rather of the optic fibres sheathing incorporated therein;
-the saddle extends over an arc of 180° in a direction transversal to the axis of the conductor, providing support practically in every oblique direction which the conductor is apt to follow;
-and, finally, said support is guaranteed over an arc of at least 20° along the axis X-X, so as to guarantee the support of the conductor practically beyond the point of inflection of the catenary followed by the conductor itself.

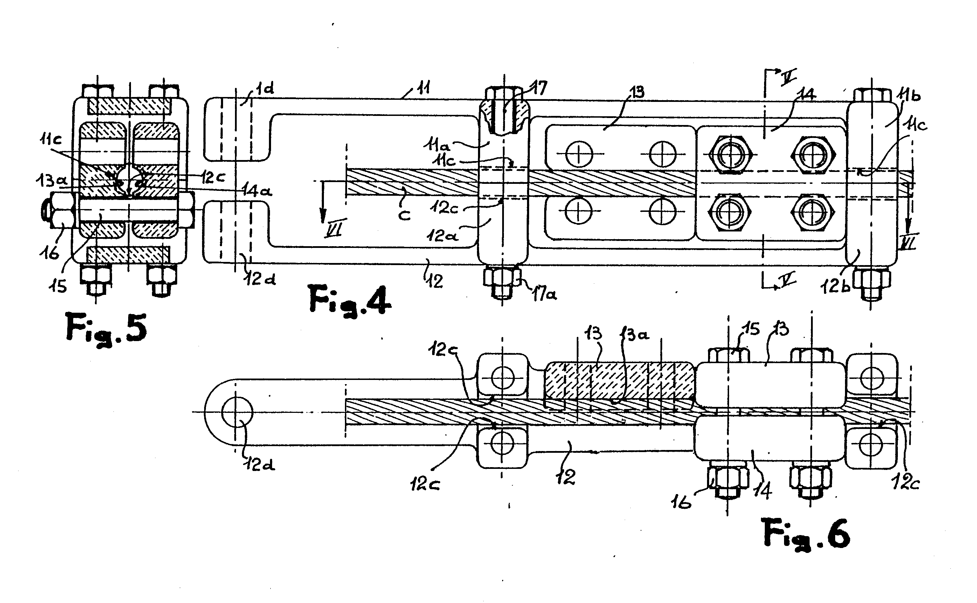

In the embodiment shown in figures 4 to 6, the clamping device has a relatively more complex structure, formed of an anchorage element comprising a pair of brackets 11 and 12, and of two pairs of clamping plates 13 and 14.

As clearly shown in the drawings, the two plates 13 and 14 have exactly the same shape and they each comprise an axial groove 13a and 14a for housing the conductor C, similarly to the plates 2 and 3 described heretofore.

The two plates 13 and 14 are provided with transversal holes into which engage pairs of bolts 15 with respective nuts 16, by means of which the plates are clamped onto the conductor C.

As already said, the anchorage system illustrated in figures 4 to 6 comprises brackets 11 and 12 which are also alike; each bracket has in fact an elongated plate portion, with two transversal tailpieces 11a, 11b and 12a, 12b. Through holes are provided across said tailpieces for receiving bolts 17 with respective nuts 17a in order to tighten together the brackets 11 and 12.

In correspondence of the surfaces of mutual contact of the tailpieces 11a, 11b and respectively, 12a, 12b, there are provided axial half-hour 11b and 12c, through which can freely pass the conductor C.

When the two brackets 11 and 12 are tightened together, they leave an open space between them, delimiter by the inner surfaces of the plate portions and of the tailpieces 11a, 11b and 12a, 12b, said space housing two pairs of clamping plates 13, 14, which clamp two successive lengths of the same conductor C.

As can be easily understood, the function of the clamping plates is to grip the conductor C, while the function of the brackets 11 and 12, and more particularly of their tailpieces 11a, 11b, 12a and 12b, is to axially retain the plates 13, 14 and thus, in the end, the conductor C. The brackets 11, 12, each have at their free end a transversal hole 11b, 12d, through which is inserted a pin or like (not shown) for anchoring said brackets to the anchorage point of the conductor C.

As can be seen from the drawings, the clamping device used in the anchorage system according to figures 4 to 6 does not provide for any damping pad or sleeve, similar to the sleeves 8 of figures 1 and 2. This mainly depends on the fact that anchorage systems, due to their structure and function, tend to rotate about the cited anchor pin (holes 11b, 12d) until they take up an alignment along the pulling direction of the conductor C. Consequently, the conductor does not form a bend on leaving the grooves 13a, 14a, whereby it has less requirement to be damped in this position (contrary to what happens in the case of the clamping device shown in figures 1 and 2).

In the case of conductors subjected to strong vibrations, a sleeve 8 could however be provided in correspondence of at least the end of the pair of plates 13, 14, bearing on the tailpieces 11a, 11b, i.e. the end of outlet of the conductor C from the anchorage system.

It should also be noted, in relation to this anchorage system, that thanks to its modular construction, it is possible to use a single pair of clamping plates 13, 14, when the tension load on the conductor C is low, or two pairs following each other (as actually shown), when the tension load increases, or even more than two pairs of clamping plates (in this case, obviously making the brackets 11 and 12 longer in proportion), when the tension load on the conductor C is particularly high. This hence allows to avoid - in order to guarantee a positive retention of the conductor - having to increase the clamping pressure of the plates 13 and 14 on the conductor C above values which are incompatible with the structure of the conductor itself and, above all, of the optic fibres sheathing incorporated therein.

There follow some examples of tests carried out on a conductor incorporating an optic fibres sheathing, having a theoretic diameter of 13.8 mm:

Example 1 -Use has been made of two pairs of clamping plates having grooves precision machined with a diameter of 14 mm and with a circumferential development of 164°. The section of the two grooves, facing each other and having a gab $l$ = 2 mm between them, forms a perfect circle having an actual diameter of 14 mm.

Example 2 -Use has been made of two pairs of clamping plates as in Example 1, but having grooves precision machined with a diameter of 15 mm and with a circumferential development of 150°. These grooves form a circle when the gap between them is $l$ = 4 mm.

Example 3 -Use has been made of two pairs of clamping plates as in Example 1, but having grooves precision machined with a diameter of 16 mm and with a circumferential development of 144°. These grooves form a circle when the gap between them is $l$ = 5 mm.

In all three cases the plates have been clamped by acting on the bolts 15, 16, with a dynamometric spanner tared at 10 Kgm. After having mounted two pairs of plates 13, 14, onto an anchorage system like that of figures 4 to 6, a progressively increasing pull has been imparted on the conductor, up to breaking thereof: in each case, two fundamentally important facts have been observed:

-on one hand, there is no interruption of the transmission along the optic fibres, either during the clamping action of the clamping device, or during the pull imparted on the conductor up to breaking thereof: this evidently means that the clamping action is mild enough as not to cause any deformation of the conductor, or of the optic fibres sheathing;

-on the other hand, there is no sliding of the conductor into the precision machined grooves: this evidently means that the clamping action is strong enough to guarantee in any case the retention of the conductor.

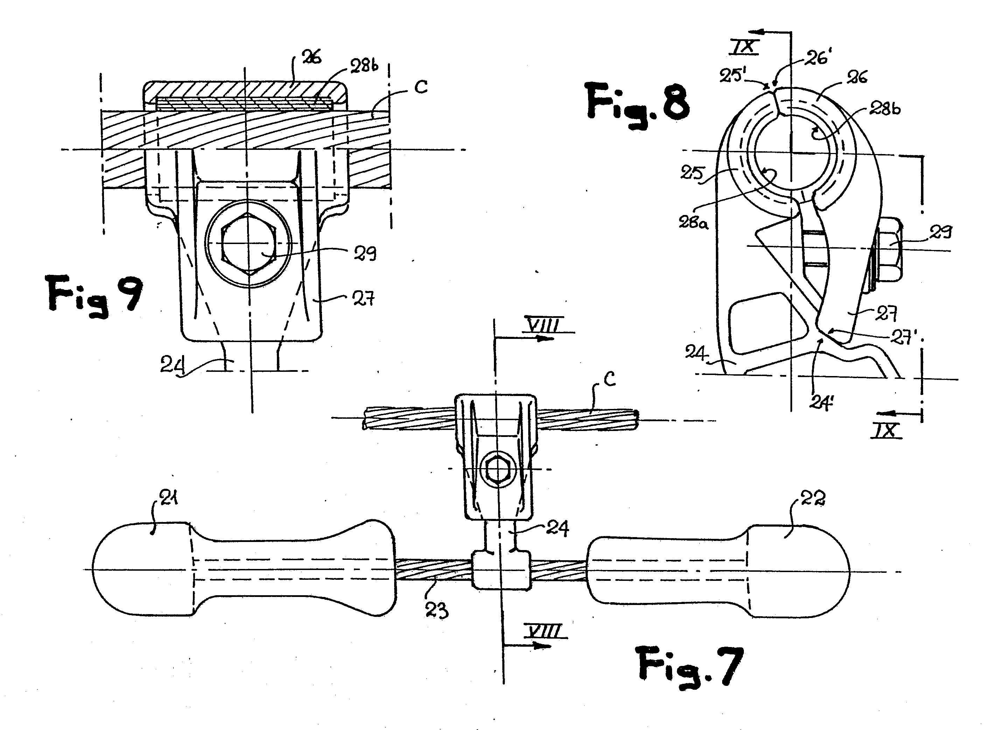

In the embodiment of figures 7 to 9, the clamping device according to the invention is used for connecting a vibration damper to a conductor incorporating an optic fibres sheathing.

The vibration damper has the conventional structure comprising two counterweights 21 and 22, fixed at the end of a messenger cable 23 which is integral with a bracket 24 of the clamping device. Said bracket 24 forms an extension of a first saddle-shaped clamping plate 25, into the groove of which - in this case, throughout the length thereof - there is housed a first half-sleeve 28a of elastomeric material.

With the saddle-shaped plate 25 there cooperates a second saddle-shaped clamping plate 26, having an extension tailpiece 27. Also into the groove of the plate 26 - again throughout its length - there is housed a half-sleeve 28b of elastomeric material.

The plate 26 is clamped against the plate 25 by means of a single bolt 29. Moreover, the plate 26 bears directly onto the plate 25 in correspondence of the upper edge 25'-26' and, by way of the tailpiece 27, onto the bracket 24 in correspondence of the mutual bearing point 24'-27'. This double bearing allows to closely tighten the bolt 29, so as to prevent the clamping device from accidentally spreading apart, but making sure that the pressure imparted on the conductor C by the plates 25, 26, through the sleeve 28a, 28b, remains within the foreseen limits.

As it appears evident from figures 7 to 9, this embodiment does not provide for a precision machined cylindrical surface in direct contact with the conductor. In fact, in this embodiment, the axial sliding force between the conductor and the clamping device is very slight, or almost missing, whereas, due to the specific function of the damper 21-22-23, the oscillation and vibration forces are very high. Furthermore, the axial length of the clamping plates is relatively small. These are the reasons whereby, in this embodiment, the sleeve 28a, 28b, covers practically the whole length of the grooves of plates 25, 26.

Nevertheless, in particular cases, it is also possible - even on the clamping device used for connecting a vibration damper to a conductor - to provide for a precision machined central zone of the groove surfaces in direct contact with the conductor.

In actual fact, the two embodiments illustrated in figures 4 to 6 and, respectively, in figures 7 to 9, represent extreme configurations of the clamping device according to the invention, and precisely, those corresponding to the cases in which there are no vibration forces (figures 4 to 6) and, respectively, no axial sliding forces (figures 7 to 9) between the clamping device and the conductor. In every other case, it will just be a question of planning the clamping device according to a configuration apt to satisfy at best the particular operating conditions in which the device finds itself, through a proper dimensioning of the precision machined cylindrical surface portions in direct contact with the conductor and, respectively, of the damping sleeve portions.

It is anyhow understood that the invention is not limited to the particular embodiments described and illustrated, but that many constructive variants can be provided other than the same, particularly also for what concerns the configuration and positioning of the damping pads, without thereby departing from the protection scope of the invention itself.

## Claims

1) Clamping device for retaining cables or conductors of overhead electric lines - particularly used for cables or conductors incorporating, along their axis, a sheathing containing optic fibres - of the type comprising at least one pair of clamping plates, each provided with an axial groove for housing the cable or conductor, characterized in that said grooves are precision machined, through part of their length, according to an exactly cylindrical surface having a radius not exceeding 120% of the theoretic radius of the conductor, and that they comprise, through another part of their length close to at least one of their ends, widened recesses for housing damping pads of elastomeric material.

2) Clamping device as in claim 1), wherein said precision machined groove portions have an axial dimension between 0% and 100% of the groove length, said portion housing the damping pads having an axial dimension included between 100% and, respectively, 0% of the groove length.

3) Clamping device as in claim 1) or 2), wherein the circular section of the groove of each plate develops over an arc of less than 180, and preferably not exceeding 165°.

4) Clamping device as in claim 1) or 2), wherein said circular section has a radius exceeding by 0.1 to 1.1 mm the theoretic radius of the conductor.

5) Clamping device as in claim 1) or 2), wherein said recesses are provided in correspondence of the groove of only one of the clamping plates.

6) Clamping device as in claim 1) or 5), wherein said recesses have a semicylindrical configuration, having a radius wider than that of the corresponding groove of the clamping plate, and said damping pads have a cylindrical sleeve section.

7) Clamping device as in claim 1) or 5), wherein said recesses comprise axial retention means for said damping pads or sleeves.

8) Clamping device as in claim 7), wherein said axial retention means consist of annular shoulders.

9) Clamping device as in claim 6), wherein said cylindrical sleeves forming the damping pads have a radial thickness exceeding the radial depth of the respective recess.

10) Clamping device as in claim 1) or 2), used as suspension clamp, wherein two axially extending tailpieces are associated to the lower clamping plate, on opposite sides thereof, each tailpiece having a saddle configuration, the upper surface of which, joined to the ends of the semicylindrical surface of the groove of the lower plate, has a curvature radius exceeding 450 mm.

11) Clamping device as in claim 10), wherein the upper surface of the saddle-shaped tailpieces is a surface of revolution about the longitudinal axis of the grooves of the clamping plates.

12) Clamping device as in claim 11), wherein said surface of revolution progressively widens starting from the end of the groove in the lower plate, similarly to a trumpet surface.

13) Clamping device as in claim 11) or 12), wherein said surface of revolution of the saddle-shaped tailpieces extends, in a direction transversal to the axis of the conductor, over an arc of 180°.

14) Clamping device as in claim 11) or 12), wherein said surface of revolution of the saddle-shaped tailpieces extends, along the axis of the conductor, over an arc of at least 20°, so as to form a semiconical opening of at least 20°.

15) Clamping device as in claim 10), wherein said saddle-shaped tailpieces are fixedly connected to a support body for the two clamping plates.

16) Clamping device as in claim 15), wherein said support body is provided at its centre with at least one transversal slit having an overturned T-section for receiving the head of tightening bolts.

17) Clamping device as in claim 16), wherein the shank of said tightening bolts crosses said clamping plates.

18) Clamping device as in claim 1) or 2), used as anchorage system, wherein said two clamping plates are connected to axial retention brackets.

19) Clamping device as in claim 18), wherein the grooves of said clamping plates have their cylindrical precision machined surface extending throughout 100% of their length.

20) Clamping device as in claim 18), wherein the grooves of said clamping plates have said cylindrical precision machined surface throughout their length, except for a portion housing said damping pads being provided in correspondence of the end of outlet of the conductor from the anchorage system.

21) Clamping device as in claim 18), providing for two axial retention brackets, coupled together, between which a space is formed for housing one or more pairs of clamping plates.

22) Clamping device as in claim 18) or 21), wherein said brackets extend, beyond said housing space, into tailpieces provided with a hole for connection to the anchorage structure.

23) Clamping device as in claim 1) or 2), used for connecting to a conductor a vibration damper having counterweights and a messenger cable, wherein a first clamping plate is formed in one piece with a bracket integral with the messenger cable, and a second clamping plate is formed in one piece with a tailpiece bearing on said bracket, the two plates having a second point of mutual bearing.

24) Clamping device as in claim 23), wherein the grooves of said clamping plates have said recess housing the damping pads extending through 100% of their length.

25) Clamping device as in claim 23), wherein the grooves of said clamping plates have said recess housing the damping pads throughout their length, except for a small central portion having a cylindrical precision machined surface.

Fig. 1

0 255 030

Fig.2

0 255 030

Fig. 3a

Fig. 3b

Fig.5

Fig.4

Fig.6

0 255 030

Fig 9

26  28b  C

29

27

24

Fig. 8

IX  26'

25'  26

28b

25

28a

29

27

27'

24  24'

IX

VIII

C

24

21

22

23

VIII

Fig. 7

0 255 030

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 649 319 (GLEDHILL)<br>* Column 3, lines 64-74; figures 8-11 * | 1-25 | H 02 G 7/05 |
| A | FR-A-2 543 749 (LES CABLES DE LYON)<br>* Page 1, lines 34,35; page 2, lines 1,35; page 3, lines 1-3; page 5, lines 17-20; figures 1-3 * | 1-25 | |
| A | US-A-3 673 312 (AMP)<br>* Column 2, lines 17-31; figures 1-5 * | 1,22 | |

---

|  | TECHNICAL FIELDS SEARCHED (Int. Cl.4) |
|---|---|
|  | H 02 G 7/00 |

The present search report has been drawn up for all claims

| Place of search | Date of completion of the search | Examiner |
|---|---|---|
| THE HAGUE | 16-10-1987 | CERIBELLA G. |

EPO Form 1503 03.82